# EUROPEAN PATENT APPLICATION

(11) **EP 3 915 726 A1**
(43) Date of publication of application: **01.12.2021**
(21) Application number: 21174261.4
(22) Date of filing: 18.05.2021
(51) Int. Cl.: B24B 7/00, B24B 7/06, B24B 7/28, B24B 7/19, B41C 1/05, B41M 5/24, B44C 1/22, B24D 18/00

(54) **MACHINE FOR WORKING WOODEN WORKPIECES COMPRISING A LASER SYSTEM AND OPERATION METHOD THEREOF**

(30) Priority: 27.05.2020 IT 202000012499
(71) Applicant: SCM Group S.p.A., 47921 Rimini (RN) (IT)
(72) Inventor: VENTURINI, Marco, 47921 Rimini (IT); FIORANI, Alberto, 47921 Rimini (IT); BELLO, Fabrizio, 47921 Rimini (IT); PIGATO, Fabrizio, 47921 Rimini (IT)
(74) Representative: Tiburzi, Andrea

(57) **Abstract**

The present invention relates to a machine (M) for working a workpiece (P) made of wood, plastic, glass, fiberglass, metal, ceramic, and the like comprising: an entry station (1) for the entrance of said workpiece (P) to be worked and an exit station (2) for the exit of the worked workpiece (P); a conveyor group (3) for moving said workpiece (P) to be worked, according to a forward direction (A), from said entry station (1) towards said exit station (2); at least one working unit (4) of said workpiece (P), arranged overhead with respect to said conveyor group (3) comprising at least one working tool (41) of said workpiece (P); said machine (M) being characterized in that it comprises a laser system (5) configured for carrying out further working operations on said workpiece (P).

The present invention also relates to a laser system (5) that can be installed on a machine (M) for machining a workpiece (P).

The present invention also relates to an operation method of a machine (M) for machining a workpiece (P).

## Description

The present invention relates to a machine for working wooden workpieces comprising a laser system and operation method thereof.

The present invention also relates to a laser system to be installed on a machine for machining wooden workpieces.

The present invention also includes the operation method of a machine for machining wooden workpieces.

More in detail, the invention relates to a through-feed machine for machining wooden workpieces or also other materials such as plastic, glass, fiberglass, metal, ceramic, and the like, comprising a laser system used to perform further operations on the workpieces, such as the engraving and/or the decoration and/or the abrasion and/or the marking and/or the finishing of the pieces, of the aforementioned type, designed and manufactured in particular for sanding the wooden workpieces, but which can be used for any machining of a wooden workpiece, which requires through-feed machining.

In the following the description will be addressed to a sanding machine but it is clear that it should not be considered limited to this specific use.

As is well known, machines for working wooden workpieces are currently known comprising laser systems capable of carrying out further operations on the workpieces, mainly engraving the pieces.

These known machines are machining centers, which perform the machining on the workpieces, while they are stationary on the work surface.

There are also known as the so-called "through-feed " machines for machining wooden workpieces, namely, they perform machining during the movement of the workpieces on the work surface.

In these through-feed machines, currently, no laser systems are used to perform further operations on the workpieces, such as the engraving.

In the light of the above, it is, therefore, an object of the present invention to provide a machine for machining wooden workpieces which performs a through-feed machining, and which is equipped with a laser system to perform further operations on the workpiece, such as the engraving.

Another object of the invention is to provide a laser system to be installed on through-feed machining machines, which is simple to use and can be easily installed on existing machines, capable of performing further operations on the workpieces, in particular the engraving.

A further object of the present invention is to provide an operation method of a sanding machine equipped with a laser system for carrying out further operations on a wooden workpiece, in particular the engraving.

It is therefore specific object of the present invention a machine for working a workpiece made of wood, plastic, glass, fiberglass, metal, ceramic and the like comprising: an entry station for the entrance of said workpiece to be worked and an exit station for the exit of the worked workpiece a conveyor group for moving said workpiece to be worked, according to a forward direction, from said entry station towards said exit station, at least one working unit of said workpiece, arranged overhead with respect to said conveyor group comprising at least one working tool of said workpiece, said machine being characterized in that it comprises a laser system configured for carrying out further working operations on said workpiece.

Further according to the invention, said laser system is arranged in said at least on working unit, near said exit station.

Preferably according to the invention, said machine is a sanding machine, and said at least one working tool is a sanding tool.

Still according to the invention, said conveyor group comprises a conveyor belt.

Always according to the invention, said conveyor belt comprises a first portion and a second portion arranged spaced apart by a distance apart, in correspondence of which a slot is obtained, through which said laser beams pass, coming from said laser system.

Further according to the invention, said conveyor group comprises a conveyor belt extending without interruptions from said entry station towards said exit station.

Preferably according to the invention, said laser system comprises a laser beam emitting device capable of carrying out further operations on said workpiece, and a containment element of said laser beam.

Still according to the invention, said machine comprises a suction and/or blowing system capable of sucking and/or blowing the fumes produced during the execution of said further operations and the dust generated by said working unit.

Always according to the invention, said containment element comprises a first element and a second element.

Further according to the invention, said sucking and/or blowing system is said containment element, said first element is a first sucking and/or blowing hood and said second element is a second sucking and/or blowing hood extending according to a development direction, orthogonal with respect to said forward direction, and said emitting device is arranged between said first and second sucking and/or blowing hood, so that said first and second sucking and/or blowing hood are capable of sucking and/or blowing the fumes produced during the execution of said further operations and the dust produced by said working unit.

Preferably according to the invention, said containment element is a box element arranged around said emitting device, so as to completely surround it, extending according to said development direction, said box element comprises a first end, arranged in correspondence of said emitting device, and a second end arranged near to said conveyor group (3), and said second end is open for allowing the passage of said laser beams, or said second end comprises a transparent surface for said laser beams (L). Still according to the invention, said sucking and/or blowing system is arranged in said working unit, so as to suck and/or blow the fumes produced during the execution of said further operations and the dust produced by said working unit, in correspondence of said second end.

Always according to the invention, said laser system comprises an absorbent surface of said laser beams insertable in said conveyor belt, capable of absorbing laser beams emitted by said emitting device.

Further according to the invention, said further operations carried out by said laser system on said workpiece are: engraving and/or decoration and/or abrasion and/or marking and/or finishing.

It is further object of the present invention a laser system, insertable in a machine and capable of synchronizing with the operation of said machine for working a workpiece, made of wood, plastic, glass, fiberglass, metal, ceramic and the like, of the type comprising an entry station for the entrance of said workpiece to be worked, an exit station for the exit of the worked workpiece, said laser system being insertable in correspondence of said exit station, a conveyor group for moving said workpiece to be worked, according to a forward direction, from said entry station to said exit station, at least one working unit of said workpiece, said laser system being characterized in that it comprises: a laser beams emitting device capable of carrying out further operations on said workpiece, and a containment element of said laser beams.

Further according to the invention, said at least one containment element is a box element arranged around said emitting device, so as to surround it completely, extending according to said first direction, said box element comprises a first end, arranged in correspondence of said emitting device, and a second end arranged near said conveyor group, and said second end is open, for allowing the passage of said laser beams, or said second end comprises a transparent surface for said laser beams.

Preferably according to the invention, containment element comprises a first sucking and/or blowing hood and a second sucking and/or blowing hood extending according to said first direction, and said emitting device is arranged between said first and second sucking and/or blowing hood, so that said first and second sucking and/or blowing hood are capable of sucking and/or blowing the fumes produced by the further operations carried out by the laser system and the dust produced by the workpiece working.

Still according to the invention, said system comprises an absorbent surface of said laser beams capable of absorbing said emitted laser beams, when in use on said conveyor group.

It is further object of the present invention an operation method of a sanding machine, of the type comprising an entry station for the entrance of said workpiece to be worked, an exit station for the exit of the worked workpiece, a conveyor group for moving said workpiece to be worked, according a forward direction, from said entry station towards said exit station, at least one working unit of said workpiece comprising a working tool and a laser system capable of carrying out further operations on said workpiece, said method being characterized in that it comprises the following steps:
**a.** providing a workpiece at said entry station;
**b.** carrying out a working on said workpiece, by means at least one working unit;
**c.** carrying out further operations on said workpiece by means of said laser system.

Preferably according to the invention, said method may comprise a further step **b'.** removing the residues produced by the working of said workpiece carried out in said step **b.**

Still according to the invention, said further operations carried out in said step **c.** are engraving and/or decoration and/or abrasion and/or marking and/or finishing.

Always according to the invention, the working carried out on said workpiece in said step **b.** is a sanding.

The present invention will be now described, for illustrative but not limitative purposes, according to its preferred embodiments, with particular reference to the figures of the enclosed drawings, wherein:
figure 1 illustrates a sectional side view of the machine for machining wooden workpieces comprising a laser system, object of the present invention;
figure 2 illustrates a further sectional side view of the machine shown in figure 1;
figure 3 illustrates a perspective view of a second embodiment of a component of the machine for machining wooden workpieces comprising a laser system, object of the present invention;
figure 4a illustrates a schematic side view of a further embodiment of the machine object of the present invention; and
figure 4b illustrates a schematic side view of still a further embodiment of the machine object of the present invention.

In the various figures similar parts will be indicated with the same numerical references.

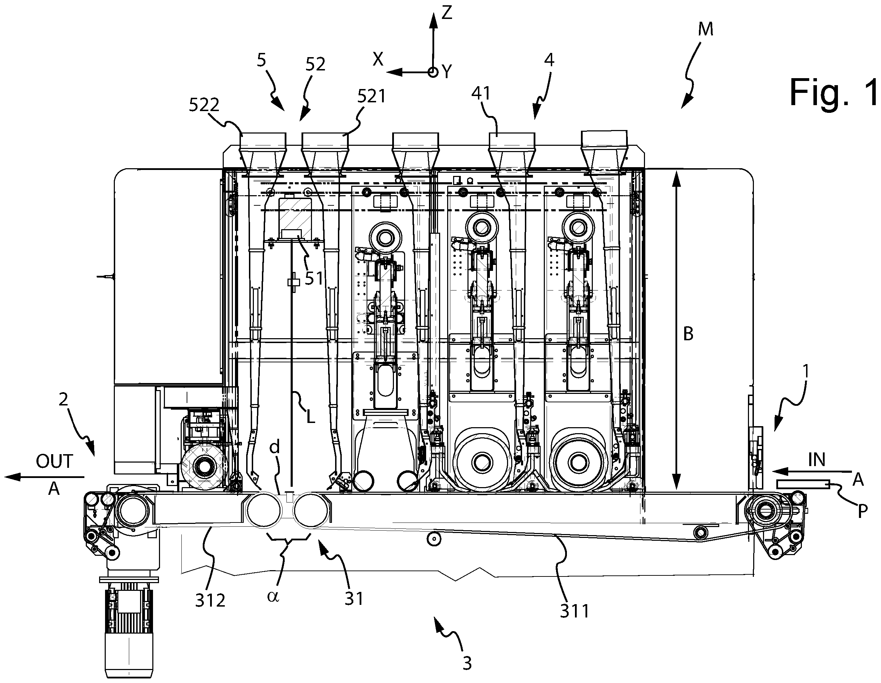

With reference to figure 1, the sanding machine M object of the present invention essentially comprises an entry station 1, where the workpieces P to be machined are inserted according to an advancement direction A, parallel to the X axis of the Cartesian reference system XYZ, an exit station 2, from which the machined workpieces P exit, according to the same direction A, a conveyor group 3, to transport the workpieces P to be machined according to said feed direction A from said entry station 1 towards said exit station 2, at least one working unit 4, to perform a machining, in particular sanding, on said workpieces P to be machined, and a laser system 5 to carry out further operations on the workpieces P, such as engraving and/or decoration and/or abrasion and/or marking and/or finishing.

The workpieces P are essentially panels such as furniture doors, or parquet strips, made of non-noble material, which is ennobled through the use of said laser system 5.

In particular, said conveyor group 3 comprises a conveyor belt 31, on which the workpiece P to be machined is placed, which is transported from said entry station 1 to said exit station 2 according to the advancement direction A.

With reference to figure 1, in a first embodiment, said conveyor belt 31 comprises a first portion 311 and a second portion 312.

Said first 311 and second 312 portions are arranged spaced apart by a distance α, in a spacing position along said X-axis of said Cartesian reference system XYZ.

Said first portion 311 extends from said entry station 1 towards said spacing position.

Said second portion 312 extends from said spacing position towards said exit station 2.

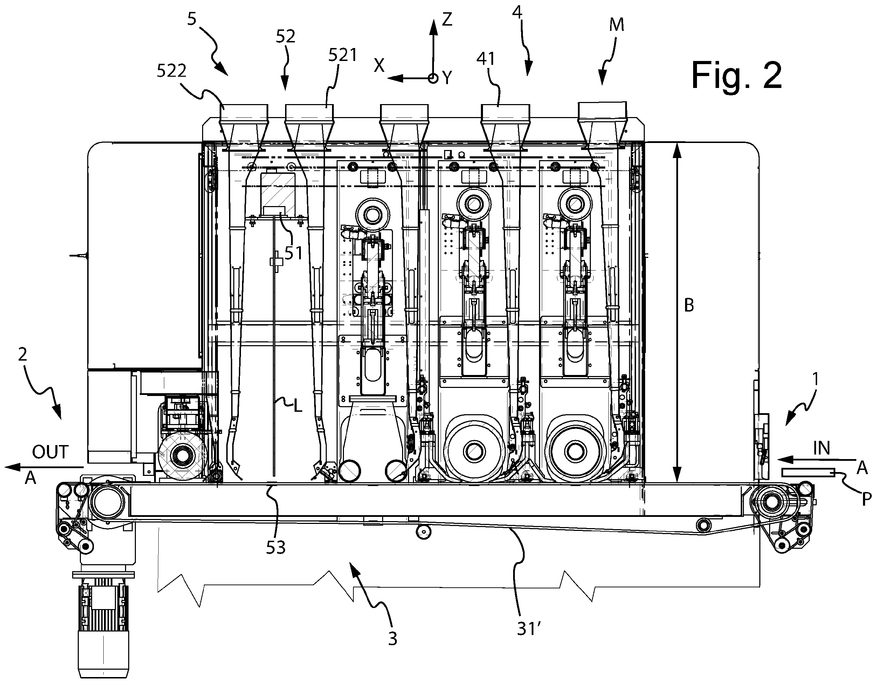

With reference to figure 2, in a second embodiment, said conveyor belt 31' is continuous and extends without interruption from said entry station 1 towards said exit station 2, along said X-axis.

Said at least one working unit 4 is arranged above the said conveyor group 3 and extends in a development direction B, parallel to the Z-axis of the Cartesian reference system XYZ, and orthogonal to said advancement direction A.

Said at least one working unit 4 comprises at least one sanding tool 41, provided with an abrasive surface, facing the underlying conveyor belt 31, 31' to come into contact with the upper surface of the workpiece P, arranged above the same conveyor belt 31, 31'.

Said sanding tool 41 can also be an abrasive roller, or a rotary disk, such as a pad, or a brush, or a tool with cutting elements.

Said machining unit 4 can also comprise more of the working tools 41 listed above in different combinations.

Said laser system 5 is arranged in said machining unit, between said at least one working tool 41 and said exit station 2, to perform further operations on said workpiece P.

The integration of said laser system 5 in said sanding machine requires relevant changes to the machining of machine M, in order to make suitable synchronizations between the sliding of said belt conveyor 31, 31', the machining by said at least one machining tool 41 and the activation of said laser system 5 itself.

Said further operations are substantially engraving and/or decoration and/or abrasion and/or marking and/or finishing.

In particular, said laser system 5 is used to carry out engraving and finishing operations of the workpiece P, following the main polishing operations carried out by the previous machining units.

Said laser system 5 comprises a known laser beams L emitter device 51, known galvanometric mirrors not shown in the figure, and a containment element 52.

Said laser beams L are emitted according to a direction parallel to said axis Z until they reach the workpiece P to be worked, arranged on said conveyor belt 31, 31'.

With reference to figures 1 and 2, in a first embodiment, said containment element 52 comprises a first sucking hood 521 and a second sucking hood 522, which extend along said development direction B until it is close to said conveyor belt 31, 31'.

Said emitting device 51 is arranged between said first 521 and second 522 sucking hood so that these are able to suck in all the fumes and residues emitted following the impact of the laser rays L on the surface of the workpiece P.

In said embodiment, said laser system 5 can also comprise a fan, not shown in the figure, to move the air between said first 521 and second 522 sucking hoods and facilitate the suction.

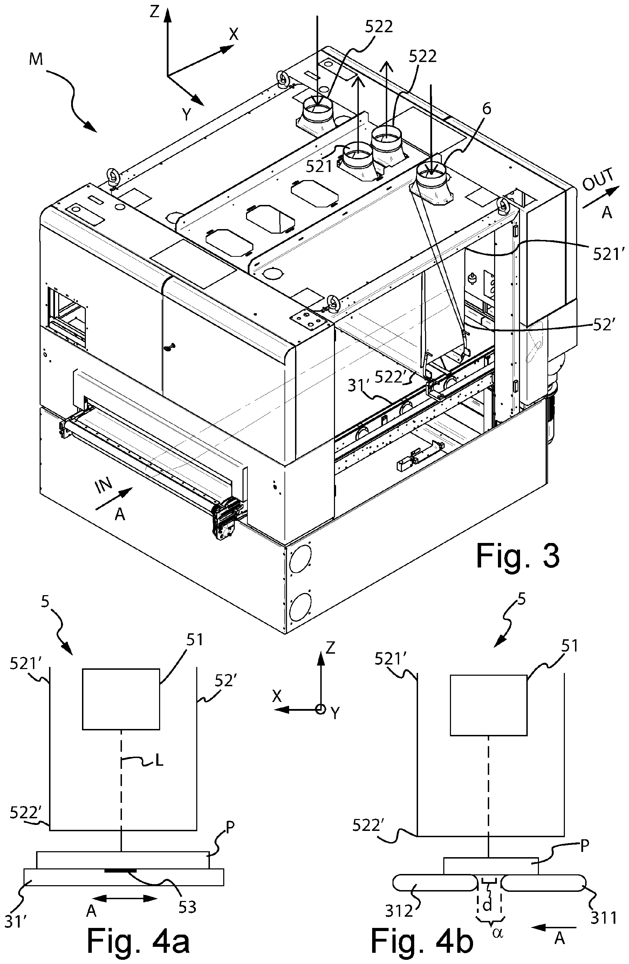

Referring now to figures 3, 4a, and 4b, in a second embodiment, said containment element 52' is a box-like element, which is arranged entirely around said emitter device 51.

Said containment element 52' extends along said development direction B, and comprises a first end 521' and a second end 522'.

Said first end 521' is arranged in correspondence with said emitter device 51, while said second end 522' is arranged close to said conveyor belt 31, 31'.

Said second end 522' is open, so as to allow the passage of said laser beams L.

Said second end 522' can also comprise a surface transparent to said laser rays L.

Said laser system 5 also comprises an absorbing surface 53, capable of absorbing the laser rays L.

When said laser system 5 is used in said second embodiment of said conveyor belt 31', said absorbent surface 53 is arranged on said conveyor belt 31' so as to avoid the wear of said conveyor belt 31' due to the impact with the laser beams L.

When said laser system 5 is used in said first embodiment of said conveyor belt 31, said absorbent surface 53 is not used, since said laser beams L pass through a slot d, obtained in said distance α between said first portion 311 and second portion 312 of said conveyor belt 31.

Since both said conveyor belt 31, 31' and said containment element 52, 52' have two embodiments, it is possible to carry out four different combinations.

In particular, with reference to figure 1, in a first combination the use of said first embodiment of said conveyor belt 31 with said first embodiment of said containment element 52 is envisaged.

In said combination, the laser beams L emitted by said emitting device 51 cut said workpiece P, in correspondence with said slot d.

With reference to figure 2, in a second combination, the use of said second embodiment of said conveyor belt 31' with said first embodiment of said containment element 52 is envisaged.

In this combination, said absorbent surface 53 is also used to avoid the wear of said conveyor belt 31'.

In a third combination, with reference to figure 4b, the use of said first embodiment of said conveyor belt 31 with said second embodiment of said containment element 52' is envisaged.

Finally, with reference to figures 3 and 4a, in a fourth combination, the use of said second embodiment of said conveyor belt 31' with said second embodiment of said containment element 52' is envisaged.

Even in this combination, said absorbent surface 53 is also used to avoid wear of said conveyor belt 31'.

For all the combinations described above, said machine M comprises a sucking system capable of sucking the fumes deriving from the further operations carried out by the laser system 5 and the dust deriving from the machining of the workpiece P.

For the combinations which provide for the use of said first 521 and second 522 sucking hood, these are the suction system.

Furthermore, for all the combinations described above, said machine M also comprises, or as an alternative to the suction system, a blowing system 6 capable of introducing air into said working unit 4, so as to direct the fumes deriving from the further operations carried out from the laser system 5 and the dust deriving from the machining of the workpiece P towards the suction system, or to create an air barrier.

In a preferred embodiment of said machine M, as shown in figure 3, said blowing system 6 is arranged externally or laterally with respect to said suction system.

It is however also possible to provide further combinations in the arrangement of said suction system with respect to said blowing system 6, such as the central arrangement of said blowing system 6 with respect to said suction system.

The operation of the machine M for machining wooden workpieces comprising a laser system 5, described above, is as follows.

When it is necessary to carry out the sanding of a workpiece P, said workpiece P is inserted in said entry station 1.

Said workpiece P is transported by said conveyor belt 31, according to the advancement direction A within the machine, and passes under said machining unit 4, where it is subjected to a first sanding operation by the sanding tool 41.

If other working units 4 are present inside said machine M, said piece P is transported by said conveyor belt 31 under the further other working units 4 where it is subjected to further machining.

Subsequently, a step of removing the residues deriving from the machining carried out on said workpiece P is carried out, for example by brushing with a brush unit or by blowing.

Before reaching the exit station 2, said workpiece P slides under said laser system 5.

Said emitting device 51 emits laser beams L, which cut the surface of the workpiece P and perform further operations, such as engraving and/or decoration and/or abrasion and/or marking and/or finishing.

In said first combination, said laser beams L strike said workpiece P, arranged over said distance α between said first 311 and second 312 portion of said conveyor belt 31, in correspondence with said slot d.

Following the impact of the laser beams L with the surface of the workpiece P, smoke and residues are generated, which are sucked up by said first 521 and second 522 sucking hoods.

In said second combination, said laser beams L strike said workpiece P arranged on said conveyor belt 31'.

To avoid wear of said conveyor belt 31', said absorbent surface 53 is arranged between said piece P and said conveyor belt 31'.

As a result of the impact of the laser beams L and the surface of the workpiece P, smoke and residues are generated, which are sucked up by said first 521 and second 522 sucking hoods.

In said third combination, said laser beams L strike said workpiece P, arranged over said distance α between said first 311 and second 312 portion of said conveyor belt 31, in correspondence with said slot d.

Said containment element 52' contains and conveys said laser beams L towards said workpiece P.

In said fourth combination, said laser beams L strike said workpiece P arranged on said conveyor belt 31'.

To avoid wear of said conveyor belt 31', said absorbent surface 53 is arranged between said workpiece P and said conveyor belt 31'.

Said containment element 52' contains and conveys said laser beams L towards said workpiece P.

At the end of the further operations performed by said laser system 5, said workpiece P is conveyed towards the outlet from said conveyor belt 31, 31'.

As is evident from the description, the machine for working wooden pieces comprising a laser system object of the present invention allows to carry out further engraving and finishing operations in a simple and efficient way, in a through-feed machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working a workpiece (P) made of wood, plastic, glass, fiberglass, metal, ceramic, and the like comprising:
an entry station (1) for the entrance of said workpiece (P) to be worked and an exit station (2) for the exit of the worked workpiece (P);
a conveyor group (3) for moving said workpiece (P) to be worked, according to a forward direction (A), from said entry station (1) towards said exit station (2);
at least one working unit (4) of said workpiece (P), arranged overhead with respect to said conveyor group (3) comprising at least one working tool (41) of said workpiece (P);
said machine (M) being **characterized in that** it comprises a laser system (5) configured for carrying out further working operations on said workpiece (P).

2. Machine (M) according to the preceding claim, **characterized in that** said laser system (5) is arranged in said at least on working unit (4), near said exit station (2).

3. Machine (M) according to any one of the preceding claims, **characterized**
**in that** it is a sanding machine; and
**in that** said at least one working tool (41) is a sanding tool.

4. Machine (M) according to any one of the preceding claims, **characterized in that** said conveyor group (3) comprises a conveyor belt (31).

5. Machine (M) according to the preceding claim, **characterized in that** said conveyor belt (31) comprises a first portion (311) and a second portion (312) arranged spaced apart by a distance (α) apart, in correspondence of which a slot (d) is obtained, through which said laser beams (L) pass, coming from said laser system (5).

6. Machine (M) according to any one of claims 1-4, **characterized in that** said conveyor group (3) comprises a conveyor belt (31') extending without interruptions from said entry station (1) towards said exit station (2).

7. Machine (M) according to any one of the preceding claims, **characterized in that** said laser system (5) comprises a laser beam (L) emitting device (51) capable of carrying out further operations on said workpiece (P), and a containment element (52, 52') of said laser beam (L).

8. Machine (M) according to any one of the preceding claims, **characterized in that** it comprises a suction and/or blowing system (6) capable of sucking and/or blowing the fumes produced during the execution of said further operations and the dust generated by said working unit (4).

9. Machine (M) according to claims 7 or 8, when depending on claim 7, **characterized in that** said containment element (52) comprises a first element (521) and a second element (522).

10. Machine (M) according to the preceding claim, when depending on claim 8, **characterized in that** said sucking and/or blowing system (6) is said containment element (52),
**in that** said first element is a first sucking and/or blowing hood (521) and said second element is a second sucking and/or blowing hood (522) extending according to a development direction (B), orthogonal with respect to said forward direction (A), and
**in that** said emitting device (51) is arranged between said first (521) and second (522) sucking and/or blowing hood, so that said first (521) and second (522) sucking and/or blowing hood are capable of sucking and/or blowing the fumes produced during the execution of said further operations and the dust produced by said working unit (4).

11. Machine (M) according to claims 7 or 8, when depending on claim 7, **characterized**
**in that** said containment element (52') is a box element arranged around said emitting device (51), so as to completely surround it, extending according to said development direction (B),
**in that** said box element (52') comprises a first end (521'), arranged in correspondence of said emitting device (51), and a second end (522') arranged near to said conveyor group (3), and
**in that** said second end (522') is open for allowing the passage of said laser beams (L), or said second end (522') comprises a transparent surface for said laser beams (L).

12. Machine (M) according to the preceding claim **characterized in that** said sucking and/or blowing system (6) is arranged in said working unit (4), so as to suck and/or blow the fumes produced during the execution of said further operations and the dust produced by said working unit (4), in correspondence of said second end (522').

13. Machine (M) according to any one of claims 7-12, when depending directly or indirectly by claim 6, **characterized in that** said laser system (5) comprises an absorbent surface (53) of said laser beams (L) insertable in said conveyor belt (31), capable of absorbing laser beams (L) emitted by said emitting device (51).

14. Machine (M) according to any one of the preceding claims, **characterized in that** said further operations carried out by said laser system (5) on said workpiece (P) are: engraving and/or decoration and/or abrasion and/or marking and/or finishing.

15. Laser system (5), insertable in a machine (M) and capable of synchronizing with the operation of said machine (M) for working a workpiece (P), made of wood, plastic, glass, fiberglass, metal, ceramic and the like, of the type comprising an entry station (1) for the entrance of said workpiece (P) to be worked, an exit station (2) for the exit of the worked workpiece (P), said laser system (5) being insertable in correspondence of said exit station (2), a conveyor group (3) for moving said workpiece (P) to be worked, according to a forward direction (A), from said entry station (1) to said exit station (2), at least one working unit (4) of said workpiece (P), said laser system (5) being **characterized in that** it comprises:
a laser beams (L) emitting device (51) capable of carrying out further operations on said workpiece (P), and
a containment element (52, 52') of said laser beams (L).

16. Operation method of a sanding machine (M), of the type comprising an entry station (1) for the entrance of said workpiece (P) to be worked, an exit station (2) for the exit of the worked workpiece (P), a conveyor group (3) for moving said workpiece (P) to be worked, according a forward direction (A), from said entry station (1) towards said exit station (2), at least one working unit (4) of said workpiece (P) comprising a working tool (41) and a laser system (5) capable of carrying out further operations on said workpiece (P), said method being **characterized in that** it comprises the following steps:
a. providing a workpiece (P) at said entry station (1);
**b.** carrying out a working on said workpiece (P), by means at least one working unit (4);
**c.** carrying out further operations on said workpiece (P) by means of said laser system (5).
